(19) Europäisches Patentamt
European Patent Office
Office européen des brevets

(11) **EP 2 860 798 B1**

(12) **EUROPEAN PATENT SPECIFICATION**

(45) Date of publication and mention
of the grant of the patent:
**10.04.2019 Bulletin 2019/15**

(21) Application number: **13803607.4**

(22) Date of filing: **15.05.2013**

(51) Int Cl.:
*H01M 2/26* *(2006.01)*     *H01M 4/04* *(2006.01)*
*H01M 4/131* *(2010.01)*     *H01M 4/1391* *(2010.01)*
*H01M 4/70* *(2006.01)*     *H01M 4/02* *(2006.01)*
*H01M 4/66* *(2006.01)*     *H01M 10/0525* *(2010.01)*
*H01M 10/058* *(2010.01)*

(86) International application number:
**PCT/JP2013/063487**

(87) International publication number:
**WO 2013/187172 (19.12.2013 Gazette 2013/51)**

(54) **ELECTRODE MANUFACTURING METHOD**

VERFAHREN ZUR HERSTELLUNG EINER ELEKTRODE

PROCÉDÉ DE FABRICATION D'UNE ÉLECTRODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2012 JP 2012132146**

(43) Date of publication of application:
**15.04.2015 Bulletin 2015/16**

(73) Proprietor: **NEC Energy Devices, Ltd.
Chuo-ku
Sagamihara-shi
Kanagawa 252-5298 (JP)**

(72) Inventors:
• **HIRAI, Masanori
Sagamihara-shi,
Kanagawa 252-5298 (JP)**
• **UKITA, Akio
Sagamihara-shi
Kanagawa 252-5298 (JP)**
• **IDE, Keiji
Sagamihara-shi
Kanagawa 252-5298 (JP)**

(74) Representative: **Vossius & Partner
Patentanwälte Rechtsanwälte mbB
Siebertstrasse 3
81675 München (DE)**

(56) References cited:
EP-A2- 2 450 989     JP-A- H11 176 447
JP-A- 2000 208 134     JP-A- 2000 251 942
JP-A- 2000 331 674     JP-A- 2002 304 988
JP-A- 2004 214 140     JP-A- 2004 303 622
JP-A- 2010 062 008     US-A1- 2006 006 063
US-A1- 2006 008 702

**Description**

**Technical Field**

The present invention relates to an electrode manufacturing method and an electrode and, more particularly, to an electrode such as an electrode for lithium ion secondary battery and an electrode manufacturing method.

**Background Art**

A lithium ion secondary battery can be reduced in size and weight and has a high energy density, so that it is utilized in applications of a power supply for a portable device, a power supply for an electric bicycle or electric vehicle, or a power supply for backing up a commercial power supply. Recently, there have been made various proposals for improving performance of the lithium ion secondary battery.

In the lithium ion secondary battery, a slurry containing active material particles is continuously or intermittently coated onto a surface of a strip-shaped collector, followed by drying and pressing so as to reduce electrical contact resistance between the active material particles and electrical contact resistance between the active material particles and the collector, and to increase energy density, thereby improving battery performance.

For example, in the lithium secondary battery, when a negative electrode active material layer mainly contains carbonaceous particles such as graphite, a positive electrode active material layer uses a lithium-containing composite oxide such as lithium-manganese composite oxide particles. Since the positive electrode active material layer mainly contains metal oxide particles, it exhibits higher electrical contact resistance and is harder to compress than the negative electrode active material layer. Thus, a higher pressure is required to compress an electrode mainly containing the metal oxide particles than to compress an electrode mainly containing the carbonaceous particles.

An electrode includes a lamination portion on which the active material is coated and an electrode lead-out portion (exposed portion) serving as a current-conducting portion. When the lamination portion on which the active material layer is coated is compressed by high pressure, the compression is performed so as not to apply pressure directly to the adjacent exposed portion. In this case, a large shearing stress is applied to a boundary between the lamination portion and exposed portion.

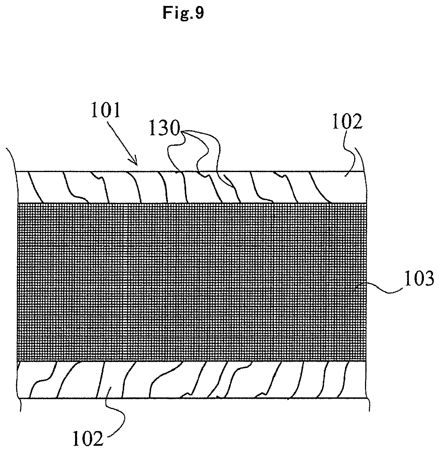

As a result, as illustrated in FIG. 9 explaining a conventional example, a wrinkle 130 or a cut occurs in an exposed portion 102 of a collector 101. This tendency is especially prominent when the active material layer is continuously formed in a strip-shaped collector. In order to solve this problem, there have been proposed a method that heats the electrode during compression (e.g., Patent Document 1) and a method that makes the exposed portion be easily stretchable by annealing (e.g., Patent Document 2) . EP 24 50 989 A2 refers to an electricity-storing device electrode comprising current collector foil; active material layer formed on at least one surface of current collector foil; and high-resistance layer 40 formed on surface(s) of current collector foil so as to be adjacent to and in direct contact with active material layer; wherein, at at least a portion of interface between active material layer and high-resistance layer, mixed phase is formed where constituents from the two layers, intermingle. US 2006/006 063 A1 refers to a method of manufacturing an electrode including a preparatory step of preparing an electrode matrix comprising a collector and an active material containing layer formed on at least one face of the collector, at least one edge part of the collector including an exposed surface free of the active material containing layer, an edge part of the active material containing layer on a side close to the exposed surface including a thinner part having a thickness smaller than a maximum thickness of the active material containing layer; and a roll-pressing step of pressing the electrode matrix with a roll press. JP 2004/ 303 622 A refers to a nonaqueous electrolyte secondary battery having a wound electrode body, wherein a positive electrode or a negative electrode formed by applying an electrode mix containing a positive electrode or negative electrode active material capable of occluding and discharging lithium ions onto both surfaces of metallic core body foil are laminated and wound through a separator, throughout a prescribed range W longitudinally extended by not less 0.5 mm, preferably not less than 0.5 mm and not more than 5 mm, from the boundary with the uncoated portion of the positive electrode mix layer or the negative electrode mix layer of the metallic core body foil, the thickness of the positive electrode mix layer or the negative electrode mix layer is made thinner than the thickness of the mix layer in the range other than the above range. US 2006/ 008 702 A1 refers to a secondary battery including an electrode assembly with a positive electrode, a negative electrode and a separator disposed between the positive and the negative electrodes, and a case in which the electrode assembly is mounted.

**Citation List**

**Patent Document**

[Patent Document 1] JP 05-129020A
[Patent Document 2] JP 2000-251942A

**Disclosure of the Invention**

**Problems to be Solved by the Invention**

By heating the electrode itself up to 140°C to 250°C during the compression of the active material layer as the method that prevents a large shearing stress from being applied to a boundary surface between a coating portion on which the active material layer is coated and a collector exposed portion during the compression, it is possible to reduce a percentage of voids of the active material layer to about 17% without applying the large shearing stress to the boundary. In this case, however, deterioration in strength of the electrode itself or battery performance occurs due to compression at high temperature.

On the other hand, when the heating temperature during the compression is lower than 140°C, a comparatively large shearing stress is applied to the boundary surface, so that it is necessary to restrict the compression pressure so as to prevent occurrence of the wrinkle or reduction in strength of the boundary surface, with the result that a desired percentage of voids cannot be obtained. Further, the method that makes the exposed portion be easily stretchable by annealing disadvantageously involves complication of a manufacturing apparatus and increase in cost.

To calculate a density and percentage of voids of each area, a part of the electrode (electrode element body, having an area A ($cm^2$)) in each area is cut accurately, and a weight and an average thickness of the cut portion are measured using an electronic balance, a micrometer, or the like. Based on the obtained measurement results, the density and percentage of voids are calculated according to the following formulas.

$$\text{Electrode density } [g/cm^3] = (\text{weight } [g] \text{ of electrode element body } [g] - \text{weight } [g] \text{ of collector})/ ((\text{average thickness } [cm] \text{ of electrode element body } - \text{thickness } [cm] \text{ of collector}) \times A [cm^2])$$

$$\text{Percentage } [\%] \text{ of voids } = (1 - \text{electrode density } [g/cm^3]/ \text{average true density } [g/cm^3] \text{ of electrode constituent material}) \times 100$$

An object of the present invention is to provide an electrode manufacturing method capable of manufacturing an electrode having excellent electrode characteristics and long-term reliability without involving occurrence of wrinkles on a collector surface even when performing compression processing under a comparatively low temperature condition where excellent electrode characteristics are maintained.

The present invention is defined by the independent claims. Dependent claims refer to preferred embodiments.

**Means for Solving the Problems**

According to one aspect, there is provided an electrode manufacturing method comprising the steps of: coating an active material layer onto a surface of a collector excluding a non-coating area to form a coating area; drying the coated active material layer; and increasing a density of the dried active material layer by compression to form a high density area, wherein in the compression step, a low density area having a lower density than the high density area is formed in a strip-shaped coating area adjacent to the non-coating area of the active material layer.

In the electrode manufacturing method, the collector is made of aluminum or an alloy thereof, and the active material layer is a positive electrode active material layer containing metal composite oxide particles.

**Advantages of the Invention**

According to the present invention, there is provided an electrode manufacturing method comprising the steps of: coating an active material layer onto a surface of a collector excluding a non-coating area to form a coating area; drying the coated active material layer; and increasing a density of the dried active material layer by compression to form a high density area, wherein in the compression step, a low density area having a lower density than the high density area is formed in a strip-shaped coating area adjacent to the non-coating area of the active material layer. With the above configuration, no wrinkles occur in the collector surface taken out through the low density area, thereby allowing a highly reliable battery electrode to be provided. In particular, in a case where the coating area and non-coating area of the active material are continuously formed on a strip-shaped collector, reduction in occurrence of the wrinkles achieved by the present invention is particularly remarkable.

**Brief Description of the Drawings**

FIGS. 1A to 1B is a view explaining an electrode according to an embodiment of the present invention, in which FIG. 1A is a plan view, and FIG. 1B is a cross-sectional view taken along a line A-A' of FIG. 1A.
FIG. 2 is a view explaining a cross section of the electrode according to the embodiment of the present invention, in which a reference numeral 102 denotes a non-coating area, 107 denotes a low density area, and 105 denotes a high density area.
FIGS. 3A and 3B are views each explaining an electrode manufacturing process according to the present invention, in which FIG. 3A illustrates a coating process using a die coater, and FIG. 3B is a cross-sectional view taken along a line B-B' of FIG. 3A.
FIGS. 4A and 4B are views each explaining another embodiment of the present invention.
FIGS. 5A and 5B are views each explaining a cutting-out process of the electrode according to the present invention.
FIGS. 6A and 6B are views each explaining another embodiment of the present invention.
FIG. 7 is a view explaining a cross section of an electrode according to another embodiment of the present invention at slurry coating time.
FIG. 8 is a view explaining another embodiment of the present invention.
FIG. 9 is a view explaining a conventional technique.

**Best Mode for Carrying Out the Invention**

An embodiment of the present invention will be described below with reference to the drawings.

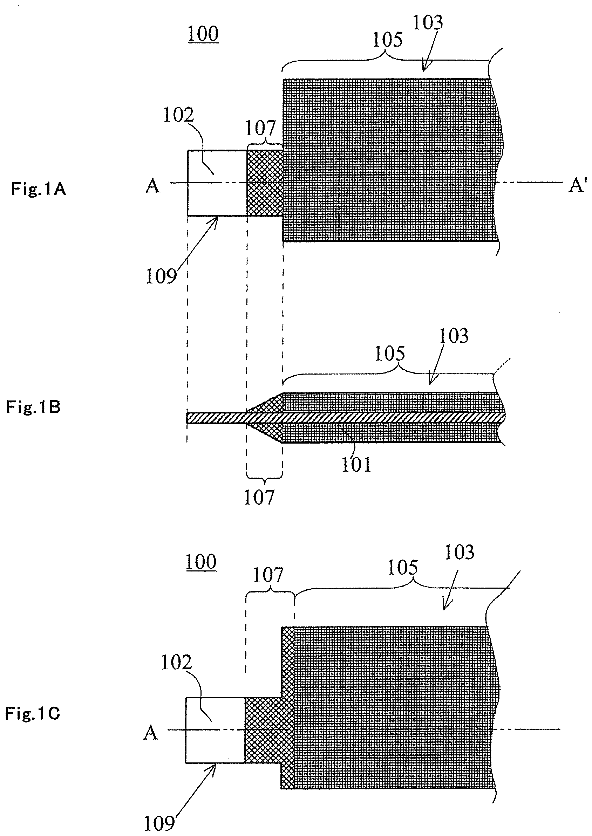

FIGS. 1A to 1C are views for explaining an electrode according an embodiment of the present invention, in which FIG. 1A is a plan view and FIG. 1B is a cross-sectional view taken along a line A-A' in FIG. 1A.
An electrode 100 of the present invention has an active material layer 103 on a surface of a collector 101. The active material layer 103 has a high density area 105 in which a density of the active material layer is enhanced by compression and, adjacent to an active material non-coating area 102 of the collector 101, a low density area 107 having a lower density of the active material layer than the high density area 105 in which the density of the active material layer is enhanced by compression.
The active material layer of the low density area 107 is not substantially compressed, so that the collector positioned in the low density area 107 has small distortion even when compressed under a comparatively low temperature.
As a result, occurrence of wrinkles in an electrode lead-out tab 109 adjacent to the low density area 107 is suppressed and, when the non-coating area 102 of the collector taken out of the low density area 107 is used as the electrode lead-out tab 109, a highly reliable electrode can be obtained.
In the above description, the low density area is positioned in the part of the electrode lead-out tab 109; however, as illustrated in FIG. 1C, the low density area may be provided not only on a surface of the electrode lead-out tab, but also on a portion other than the electrode lead-out tab 109.

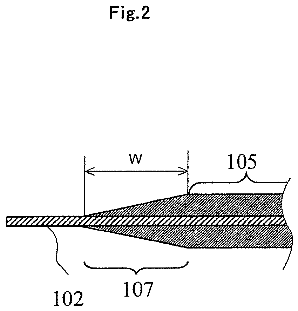

FIG. 2 is a view enlarging a part of an electrode manufactured by an electrode manufacturing method according to the present invention.
A length W of the low density area 107 from a boundary between the non-coating area 102 of the collector 101 and an active material coating area to the high density area 105 is preferably in a range of 2 mm to 15 mm and, more preferably, in a range of 4 mm to 15 mm, although this varies depending on a shape (width of the non-coating area, thickness of the collector) of the electrode to be manufactured, a porosity of the active material layer after compression, or the like.
When the length W is less then 2 mm, effect brought about by formation of the low density area cannot be sufficiently demonstrated; on the other hand, when the length W is more than 15 mm, an effective area of the electrode is undesirably reduced. When the low density area is formed in 2 mm, although a compression temperature needs to be increased as compared to a case where the length W is 4 mm or more, it is possible to reduce occurrence of the wrinkles even when compression is performed until the electrode porosity is reduced to a lower level. Further, this can become useful when the low density area is reduced so as to attach importance to a volume efficiency of the battery.
Table 1 shows minimum values of a compression rate of the electrode at which no wrinkles occur when the length W of the low density area 107 and temperature at compression time are changed.

A slurry is obtained by dispersing, in an organic solvent of N-methylpyrrolidone, the main material of a positive electrode active material (volume average diameter 10 μm, measured by a laser diffraction type particle distribution measuring device) such as lithium-manganese composite oxide, carbon black which is a conductivity imparting agent for the main material and a bonding agent of polyvinylidene fluoride. The slurry is continuously coated, in a strip shape, onto an aluminum collector having a thickness of 20 μm, using a die head to be described later, with 18 mm wide ends on both sides thereof left as a non-coating portion. Then N-methylpyrrolidone is evaporated in a drying furnace, to thereby form a positive electrode mixture layer by drying. The solid content ratio in the positive electrode is as follows: positive electrode active material : conductivity imparting agent : PVDF = 89 : 4 : 7 (mass %). An area in which a coating thickness is changed in a stepped manner, that is, the low density area is formed at the coating area adjacent to the non-coating portion so as to prevent application of pressure at compression time.

A length of the step portion can be controlled by changing a shim of the die head. The electrode porosity of the positive electrode mixture layer before compression is about 50%. Then, the electrode is compressed using a compressor to apply pressure until the wrinkles occur in the non-coating portion of the collector, and a limit electrode porosity (minimum electrode porosity) is calculated at various temperature values.

The electrode porosity that can be compressed at a compression temperature of 25°C abruptly decreases when the length W of the step portion is increased, and a change rate thereof is reduced when the length W is 10 mm or more. In particular, when the length W is 4 mm, the electrode porosity can be compressed to 35% without involving occurrence of the wrinkles. At a compression temperature of 80°C and 130°C, compression can be easily performed as compared to when the compression temperature is 25°C.

Thus, even when the length of the low density area is 2 mm, it is possible to perform compression until the electrode porosity becomes small while suppressing occurrence of the wrinkles. On the other hand, results at a compression temperature of 130 °C reveals that the length W of the step portion significantly influences the electrode porosity. At a compression temperature of 160°C, dependency of the electrode porosity on the length W of the step portion is nearly eliminated, allowing a sufficient electrode porosity to be obtained even without the step portion; however, a compression process at this temperature deteriorates battery characteristics.

From above, when the length W of the low density area is 2 mm or more, it is possible to suppress occurrence of the wrinkles under a condition that the compression temperature is in a range of 80°C to 130°C, even when the compression is performed until a desired electrode porosity is reached. Further, when the length W of the low density area is 4 mm or more, it is possible to obtain, while suppressing occurrence of the wrinkles, a lower electrode porosity as compared to when the length W of the low density area is 2 mm under a condition that the compression temperature is in a range of 25°C to 130°C. A more preferable compression temperature and a more preferable length W of the low density area for obtaining a lower electrode porosity while suppressing occurrence of the wrinkles is in a range of 80°C to 130°C and 6 mm or more, respectively.

[Table 1]

| Minimum value of electrode porosity at which no wrinkles occur | | | | | |
|---|---|---|---|---|---|
| | | Compression temperature (°C) | | | |
| | | 25 | 80 | 130 | 160 |
| Length (mm) of low density area | 2 | 47% | 37% | 25% | 19% |
| | 4 | 34% | 27% | 22% | 18% |
| | 6 | 26% | 22% | 19% | 17% |
| | 10 | 22% | 19% | 18% | 17% |
| | 15 | 20% | 18% | 17% | 17% |

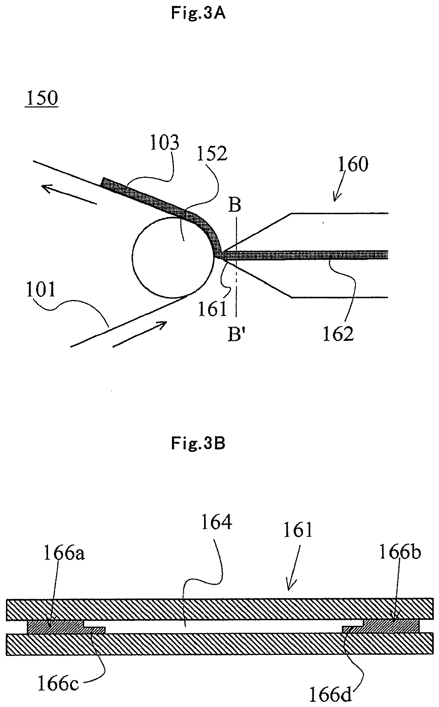

FIGS. 3A and 3B are views each explaining a coating process using a die coater, in which FIG. 3A is a view explaining operation of the die coater, and FIG. 3B is a cross-sectional view of a head portion taken along a line B-B' of FIG. 3A.

A die coater 150 is an apparatus for continuously coating the active material layer onto the strip-shaped collector 101 in a longitudinal direction thereof.

In a case where the electrode is a positive electrode, a slurry 162 obtained by dispersing, in an organic solvent of N-methylpyrrolidone, a bonding agent such as carbon black and polyvinylidene fluoride, which is a conductivity imparting agent for imparting conductivity to particles for main material of a positive electrode active material such as lithium-manganese composite oxide is ejected from a die head 161 of a slot die 160 at a predetermined pressure, whereby continuous coating of the slurry onto a surface of the strip-shaped collector 101 moving on a backup roller 152.

FIG. 3B is a cross-sectional view of the die head 161 taken along a line B-B'.

The die head 161 has, at both end portions of an eject port 164 from which the slurry 162 is ejected, shims 166a and 166b for interval adjustment of the eject port 164. The shims 166a and 166b have flow path limiting members 166c and 166d each of which is a tapered portion or a step portion whose thickness is reduced toward a center portion of the eject port 164.

Since the flow path limiting members are provided at the both end portions of the die head 161 as described above, an amount of the slurry to be ejected from the both end portion is reduced, with the result that a coating layer whose thickness is reduced in a tapered or stepped manner toward an exposed surface of the collector can be formed at the both end portions of the coating layer.

Although the die coater is used to form the coating layer in the above description, a coating apparatus of other types such as a knife coating apparatus may be used.

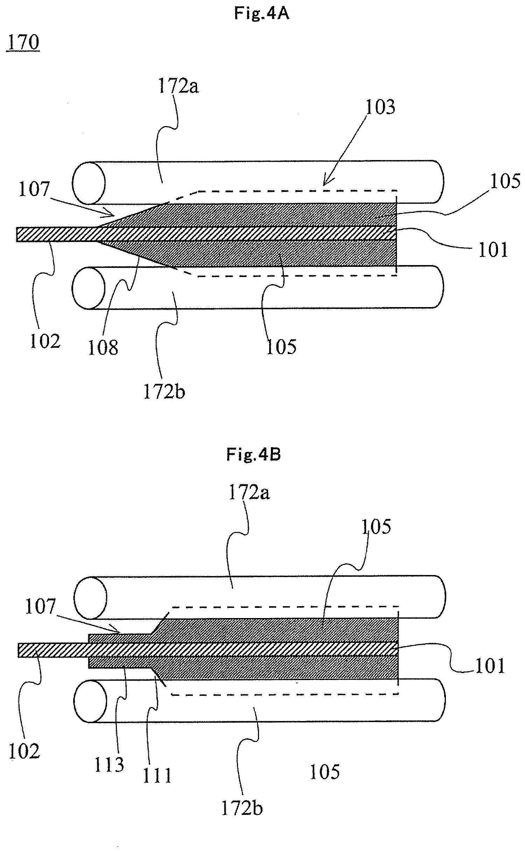

FIGS. 4A and 4B are views each explaining the electrode manufacturing process according to the present invention, which illustrates a compression process of the active material layer formed on the collector surface. FIG. 4A is a view explaining a case where an electrode in which the end portion of the coating layer is formed into the tapered shape is manufactured, and FIG. 4B is a view explaining an electrode in which the step part is formed in the end portion to form, in a continuous manner, coating layers having different thickness from each other.

In FIG. 4A, a compression process 170 is illustrated in a cross-sectional view obtained by cutting the active material layer along a plane parallel to a plane passing rotary shafts of roll presses 172a and 172b that have passed the active material layer.

The active material layer 103 continuously coated onto the collector 101 in the longitudinal direction thereof is continuously compressed by the roll presses 172a and 172b to form the high density area 105. On the other hand, a tapered portion 108 is formed in the active material layer in an area adjacent to the exposed portion 102 of the collector 101.

At compression time, by adjusting compression pressure, it is possible to form the low density area 107 to which compression pressure is not applied in a part of the tapered portion.

In FIG. 4B, as in the case of FIG. 4A, the compression process 170 is illustrated in the cross-sectional view obtained by cutting the active material layer along a plane parallel to a plane passing rotary shafts of roll presses 172a and 172b that have passed the active material layer.

In FIG. 4, the active material layer has the tapered shape in which the thickness thereof is reduced toward the exposed surface of the collector. On the other hand, the active material later in FIG. 4B has a step portion 111 and a thin layer portion 113 whose thickness is reduced. By adjusting the compression pressure such that the active material layer is compressed, excluding the thin layer portion adjacent to the exposed surface of the collector and its adjacent step portion, both the high density area 105 and low density area 107 can be formed.

In the above description, the active material layer is continuously compressed in the longitudinal direction of the collector by the roll presses; however, the compression may be performed using various compression apparatus such as a plate press.

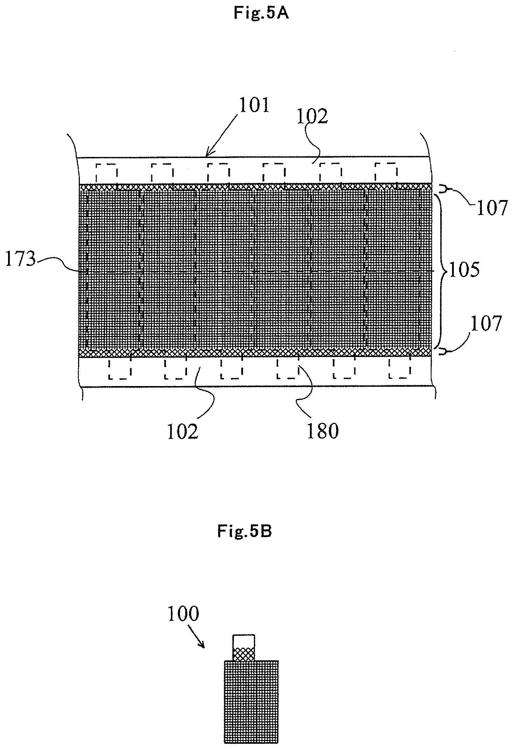

FIGS. 5A and 5B are views each explaining a cutting-out process of the electrode according to the present invention.

FIG. 5A is a partially cut-out view of the strip-shaped collector.

After the active material is coated on the strip-shaped collector 101 in the longitudinal direction thereof, the roll presses are used to compress the active material layer as illustrated in FIGS. 4A and 4B, whereby the high density area 105 is formed at a center portion of the active material layer, and the low density area 107 where the active material layer is not compressed by the roll presses is formed at both end portions of the active material layer.

Then, punching is performed along the electrode lead-out tab 109, a cutting line 180 surrounding each unit electrode, and a center line 173, thereby allowing a positive electrode illustrated in FIG. 5B to be efficiently manufactured.

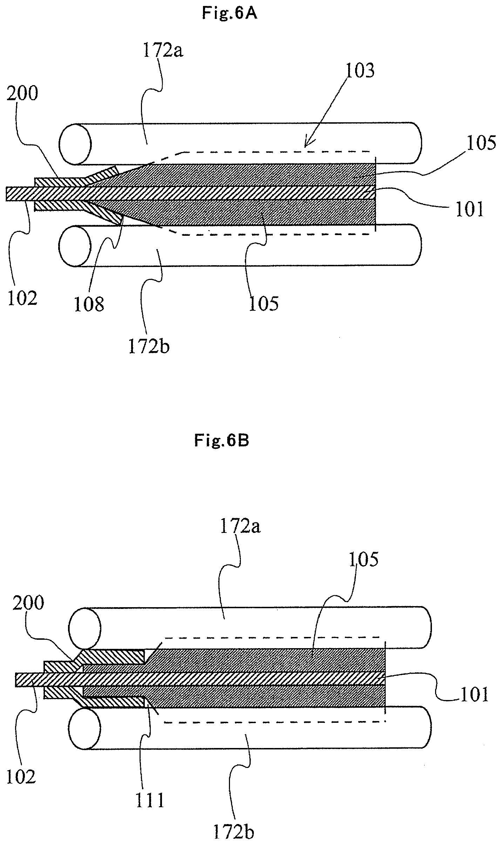

FIGS. 6A and 6B are views each explaining another embodiment of the present invention.

FIGS. 6A and 6B illustrate a case where an electrode in which the active material easily falls off from the collector is used. As illustrated in FIGS. 6A and 6B, an insulating member may be disposed in the low density area.

In this case, it is preferable that one end of the insulating member is aligned with an end portion of the electrode or a boundary between the coating area and non-coating area, and that the other end of the insulating member is located at a position not exceeding the boundary between the low density area and high density area, that is, within a range of the low density area. Disposing the insulating member in this manner can prevent the active material from falling off from the low density part or prevent the non-coating area of the active material from being short-circuited to its opposing electrode.

In a case where the insulating member is provided in the low density area formed into the tapered shape as illustrated in FIG. 6A, an insulating member 200 is disposed so as not to exceed a thickness of the center portion of the electrode. However, in this case, a part of the low density area is not covered by the insulating member. Thus, when the electrode in which the active material easily falls off from the collector is used, it is especially preferable that the insulating member 200 is disposed in the low density area formed in a stepped shape as illustrated in FIG. 6B.

That is, an electrode part positioned in the center relative to a side at which the step portion is formed is sufficiently subjected to pressure by the roll presses 172a and 172b and, thereby, the active material hardly falls off. Further, the insulating member exists in the low density area positioned between the step portion and non-coating area of the active material, so that the falling-off of the active material can be prevented. Furthermore, when the step portion is formed, positioning of the insulating member becomes easy to significantly improve productivity and workability.

In the description using FIGS. 3 to 6, the active material is continuously coated onto the collector. This is because occurrence of wrinkles is significantly more remarkable when the coating area and non-coating area of the active material are each continuously formed in a strip manner than when the coating area and non-coating area are each intermittently formed.

However, even when the active material is coated intermittently, the wrinkles may easily occur in a case where it is necessary to extremely increase the pressure of the roll presses. In such a case, by forming a step in the coating area adjacent to the non-coating area, occurrence of the wrinkles can be reduced.

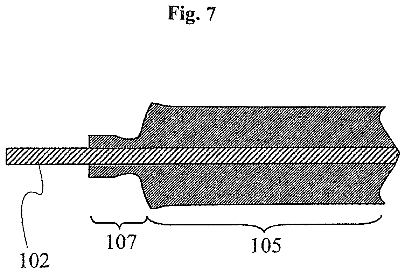

When the active material is intermittently coated onto the collector, the non-coating area is not formed at both ends of the strip-shaped collector in a width direction thereof, but formed intermittently in the longitudinal direction of the strip-shaped collector. In the intermittent coating, a coating thickness of an end portion of the coating layer at which the coating of the slurry is started may be larger than that of a center portion of the coating layer. Therefore, in the intermittent coating, the slurry part corresponding to the low density area is preferably formed in a stepped shape as illustrated in FIG. 7 so as to eliminate the large thickness part.

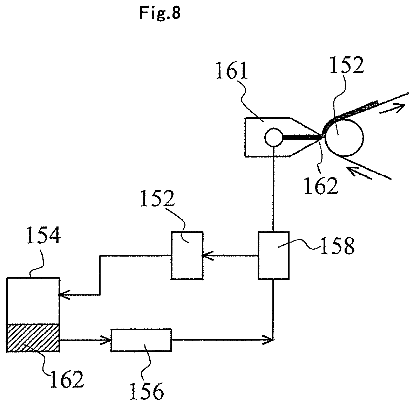

FIG. 8 is a view explaining an example of a coating apparatus.

As illustrated in FIG. 8, a die head 161, a coating valve 158 connected to the die head, a pump 156, and a tank 154 for storing a slurry 162 are provided in a slurry flow path of the coating apparatus when the intermittent coating is performed. Further, a return valve 157 is provided between the tank and coating valve 158. Here, it is preferable that at least the coating valve is constituted by a motor valve.

The motor valve can accurately switch between open/closed states even during coating of the slurry and can realize the above-described complicated coating state by controlling the slurry flow path in combination with operation of the return valve.

Further, it is preferable that a diaphragm packing is used in a slide portion for opening/closing the valve. The diaphragm packing prevents the slurry from entering the sliding portion of the valve to prevent occurrence of foreign matters such as aggregates, as well as, restricts or opens the flow path when the valve is opened/closed, interlocking with a valve shaft. As a result, it seems that the diaphragm demonstrates its effectiveness in formation of a steep step portion.

In the intermittent coating, the step portion is not formed in the longitudinal direction of the strip-shaped collector, but formed in a direction perpendicular to the longitudinal direction, thus eliminating the need to provide the flow path limiting members 166c and 166d as illustrated in FIG. 3B in the eject port of the die head. A part of the coated slurry that has a large coating thickness moves to the step portion, followed by drying. The step portion is left also in the electrode after drying. In a case where pressure is applied with an extending direction of a boundary line between the coating area and non-coating area of the active material in which the step portion is formed by the intermittent coating and a travel direction of the roll presses coinciding with each other, the wrinkles easily occur in the non-coating area and coating area, although not so much as in the continuous coating.

**Industrial Applicability**

According to the electrode manufacturing method of the present invention, it is possible to form the active material layer on the collector made of, e.g., a metal foil having a small thickness and to prevent occurrence of deformation of the collector such as wrinkles when the electrode is manufactured through a compression process after drying, thereby allowing an electrode having excellent characteristics to be provided.

**Reference Signs List**

| | |
|---|---|
| 100: | Electrode |
| 101: | Collector |
| 103: | Active material layer |
| 105: | High density area |
| 102: | Non-coating area |
| 107: | Low density area |
| 108: | Tapered portion |

| 109: | Electrode lead-out tab |
|---|---|
| 111: | Step portion |
| 113: | Thin layer portion |
| 130: | Wrinkle |
| 150: | Die coater |
| 152: | Backup roller |
| 153: | Tank |
| 154: | Pump |
| 155: | Coating valve |
| 157: | Return valve |
| 160: | Slot die |
| 161: | Die head |
| 162: | Slurry |
| 164: | Eject port |
| 166a, 166b: | Shim |
| 166c, 166d: | Flow path limiting member |
| 170: | Compression process |
| 172a, 172b: | Roll press |
| 173: | Center line |
| 180: | Cutting line |
| 200: | Insulating member |

**Claims**

1. An electrode manufacturing method comprising:

   a step of coating an active material layer onto a surface of a collector excluding a non-coating area to form a coating area;
   a step of drying the coated active material layer;
   a compression step of forming a high density area which is a coating area in a center portion of the electrode, by increasing a density of the dried active material layer, **characterized in that**,
   in the compression step, a low density area having a lower density than the high density area is formed in a strip-shaped coating area adjacent to the non-coating area of the active material layer, and
   the low density area is not pressed in the compression step.

2. The electrode manufacturing method according to claim 1, wherein
   the collector is made of aluminum or an alloy thereof, and
   the active material layer is a positive electrode active material layer containing metal composite oxide particles.

3. The electrode manufacturing method according to claim 1 or 2, wherein
   when viewed in cross section, a thickness of the low density area is uniformly reduced in thickness from a boundary with the high density area toward an exposed surface of the collector.

4. The electrode manufacturing method according to any one of claims 1 to 3, wherein
   when viewed in cross section, the low density area is a thin coating layer having a smaller thickness than the high density area, and is continued to a boundary with the high density area to the thin coating layer while forming a step portion therewith.

5. The electrode manufacturing method according to any one of claims 1 to 4, wherein
   an insulating member is disposed in the low density area.

6. The electrode manufacturing method according to any one of claims 1 to 5, wherein
   the non-coating area is cut out as an electrode lead-out tab together with the low density area and the high density area.

7. An electrode comprising:

a collector; and

an active material layer formed on a surface of the collector, wherein

the active material layer includes a high density area in which a density of particles constituting the active material layer is high and a low density area formed along an exposed surface of the collector, and

the high density area and the low density area are manufactured by the method as claimed in any one of claims 1 to 6.

8. The electrode of claim 7, comprising:

an insulating member being disposed in the lower density area, one end of the insulating member being positioned at an end portion of the electrode or a boundary between the coating area and the non-coating area, and the other end of the insulating member being located at a position within a range of the low density area and not exceeding the boundary between the low density area and the high density area.

9. The electrode according to claim 8, wherein

when viewed in cross section, a thickness of the low density area is uniformly reduced in thickness from a boundary with the high density area toward an exposed surface of the collector.

10. The electrode according to claim 8 or 9, wherein

when viewed in cross section, the low density area is a thin coating layer having a smaller thickness than the high density area, and is continued to a boundary with the high density area to the thin coating layer while forming a step portion therewith.

11. The electrode according to claim 10, wherein

the other end of the insulating member is positioned in the step portion.

12. The electrode according to any one of claims 8 to 11, wherein

the collector is made of aluminum or an alloy thereof, and

the active material layer is a positive electrode active material layer containing metal composite oxide particles.

**Patentansprüche**

1. Verfahren zur Herstellung einer Elektrode, das aufweist:

einen Schritt zum Beschichten einer Oberfläche eines Kollektors unter Ausschluss eines Nicht-Beschichtungsbereichs mit einer Aktivmaterialschicht, um einen Beschichtungsbereich zu bilden,

einen Schritt zum Trocknen der beschichteten Aktivmaterialschicht,

einen Verdichtungsschritt zur Bildung eines Bereichs hoher Dichte, der ein Beschichtungsbereich in einem Mittelabschnitt der Elektrode ist, durch Erhöhung einer Dichte der getrockneten Aktivmaterialschicht, **dadurch gekennzeichnet, dass** im Verdichtungsschritt in einem streifenförmigen Beschichtungsbereich benachbart zum Nicht-Beschichtungsbereich der Aktivmaterialschicht ein Bereich niedriger Dichte gebildet wird, der eine niedrigere Dichte als der Bereich hoher Dichte aufweist, und der Bereich niedriger Dichte im Verdichtungsschritt nicht gepresst wird.

2. Verfahren zur Herstellung einer Elektrode nach Anspruch 1, wobei

der Kollektor aus Aluminium oder einer Aluminiumlegierung besteht und

die Aktivmaterialschicht eine Positivelektroden-Aktivmaterialschicht mit Metall-Verbundoxid-Partikeln ist.

3. Verfahren zur Herstellung einer Elektrode nach Anspruch 1 oder 2, wobei

eine Dicke des Bereichs niedriger Dichte im Querschnitt von der Grenze zum Bereich hoher Dichte zu einer freiliegenden Oberfläche des Kollektors gleichmäßig abnimmt.

4. Verfahren zur Herstellung einer Elektrode nach einem der Ansprüche 1 bis 3, wobei

der Bereich niedriger Dichte im Querschnitt eine dünne Beschichtungsschicht mit einer geringeren Dicke als der Bereich hoher Dichte ist und

bis zu einer Grenze zum Bereich hoher Dichte zur dünnen Beschichtungsschicht führt, und dabei ein Stufenabschnitt gebildet wird.

**5.** Verfahren zur Herstellung einer Elektrode nach einem der Ansprüche 1 bis 4, wobei im Bereich niedriger Dichte ein Isolierelement angeordnet ist.

**6.** Verfahren zur Herstellung einer Elektrode nach einem der Ansprüche 1 bis 5, wobei der Nicht-Beschichtungsbereich zusammen mit dem Bereich niedriger Dichte und dem Bereich hoher Dichte als eine Elektroden-Anschlusslasche ausgeschnitten ist.

**7.** Elektrode mit:

einem Kollektor; und
einer auf der Oberfläche des Kollektors ausgebildeten Aktivmaterialschicht, wobei die Aktivmaterialschicht einen Bereich hoher Dichte aufweist, in welchem eine Dichte der Partikel, die die Aktivmaterialschicht bilden, hoch ist, und einen Bereich niedriger Dichte, der entlang einer freiliegenden Oberfläche des Kollektors gebildet ist, und der Bereich hoher Dichte und der Bereich niedriger Dichte mit dem Verfahren nach einem der Ansprüche 1 bis 6 hergestellt werden.

**8.** Elektrode nach Anspruch 7 mit:
einem im Bereich niedriger Dichte angeordneten Isolierelement, wobei ein Ende des Isolierelements in einem Endabschnitt der Elektrode oder einer Grenze zwischen dem Beschichtungsbereich und dem Nicht-Beschichtungsbereich angeordnet ist und das andere Ende des Isolierelements sich an einer Stelle innerhalb eines Bereichs des Bereichs niedriger Dichte befindet und nicht über die Grenze zwischen dem Bereich niedriger Dichte und dem Bereich hoher Dichte hinausgeht.

**9.** Elektrode nach Anspruch 8, wobei eine Dicke des Bereichs niedriger Dichte im Querschnitt von einer Grenze zum Bereich hoher Dichte zu einer freiliegenden Oberfläche des Kollektors hin gleichmäßig abnimmt.

**10.** Elektrode nach Anspruch 8 oder 9, wobei der Bereich niedriger Dichte im Querschnitt eine dünne Beschichtungsschicht ist, die eine geringere Dicke aufweist als der Bereich hoher Dichte und bis zu einer Grenze zum Bereich hoher Dichte zur dünnen Beschichtungsschicht hin führt, und dabei ein Stufenabschnitt gebildet wird.

**11.** Elektrode nach Anspruch 10, wobei das andere Ende des Isolierelements im Stufenabschnitt positioniert ist.

**12.** Elektrode nach einem der Ansprüche 8 bis 11, wobei
der Kollektor aus Aluminium oder einer Aluminiumlegierung besteht und
die Aktivmaterialschicht eine Positivelektroden-Aktivmaterialschicht mit Metall-Verbundoxid-Partikeln ist.

**Revendications**

**1.** Procédé de fabrication d'une électrode comprenant :

une étape de revêtement d'une couche de matériau actif sur une surface d'un collecteur à l'exclusion d'une zone de non-revêtement pour former une zone de revêtement ;
une étape de séchage de la couche de matériau actif revêtue ;
une étape de compression de formation d'une zone à haute densité qui est une zone de revêtement dans une partie centrale de l'électrode, en augmentant une densité de la couche de matériau actif séchée,
**caractérisé en ce que**,
dans l'étape de compression, une zone à basse densité ayant une densité plus basse que la zone à haute densité est formée dans une zone de revêtement en forme de bande adjacente à la zone de non-revêtement de la couche de matériau actif, et
la zone à basse densité n'est pas pressée dans l'étape de compression.

**2.** Procédé de fabrication d'une électrode selon la revendication 1, dans lequel
le collecteur est fait d'aluminium ou d'un alliage de celui-ci, et
la couche de matériau actif est une couche de matériau actif d'électrode positive contenant des particules d'oxyde composite métallique.

**3.** Procédé de fabrication d'une électrode selon la revendication 1 ou 2, dans lequel

lorsqu'elle est vue en coupe transversale, une épaisseur de la zone à basse densité est uniformément réduite en termes d'épaisseur à partir d'une limite avec la zone à haute densité vers une surface exposée du collecteur.

4. Procédé de fabrication d'une électrode selon l'une quelconque des revendications 1 à 3, dans lequel lorsqu'elle est vue en coupe transversale, la zone à basse densité est une couche mince de revêtement ayant une épaisseur plus petite que la zone à haute densité, et est continue jusqu'à une limite avec la zone à haute densité à la couche mince de revêtement tout en formant une partie de marche avec celle-ci.

5. Procédé de fabrication d'une électrode selon l'une quelconque des revendications 1 à 4, dans lequel un organe isolant est disposé dans la zone à basse densité.

6. Procédé de fabrication d'une électrode selon l'une quelconque des revendications 1 à 5, dans lequel la zone de non-revêtement est découpée sous la forme d'une languette de sortie d'électrode conjointement avec la zone à basse densité et la zone à haute densité.

7. Électrode comprenant :

un collecteur ; et
une couche de matériau actif formée sur une surface du collecteur, dans laquelle la couche de matériau actif inclut une zone à haute densité dans laquelle une densité de particules constituant la couche de matériau actif est élevée et une zone à basse densité formée le long d'une surface exposée du collecteur, et
la zone à haute densité et la zone à basse densité sont fabriquées par le procédé selon l'une quelconque des revendications 1 à 6.

8. Électrode selon la revendication 7, comprenant :
un organe isolant disposé dans la zone à densité plus basse, une extrémité de l'organe isolant étant positionnée en une partie d'extrémité de l'électrode ou une limite entre la zone de revêtement et la zone de non-revêtement, et l'autre extrémité de l'organe isolant étant située à une position à l'intérieur d'une plage de la zone à basse densité et ne dépassant pas la limite entre la zone à basse densité et la zone à haute densité.

9. Électrode selon la revendication 8, dans laquelle lorsqu'elle est vue en coupe transversale, une épaisseur de la zone à basse densité est uniformément réduite en termes d'épaisseur à partir d'une limite avec la zone à haute densité vers une surface exposée du collecteur.

10. Électrode selon la revendication 8 ou 9, dans laquelle lorsqu'elle est vue en coupe transversale, la zone à basse densité est une couche mince de revêtement ayant une épaisseur plus petite que la zone à haute densité, et est continue jusqu'à une limite avec la zone à haute densité à la couche mince de revêtement tout en formant une partie de marche avec celle-ci.

11. Électrode selon la revendication 10, dans laquelle l'autre extrémité de l'organe isolant est positionnée dans la partie de marche.

12. Électrode selon l'une quelconque des revendications 8 à 11, dans laquelle le collecteur est fait d'aluminium ou d'un alliage de celui-ci, et la couche de matériau actif est une couche de matériau actif d'électrode positive contenant des particules d'oxyde composite métallique.

100

105 103

102 107

Fig.1A

A —— ·———————————————————————·—— A'

109

103

105

Fig.1B

101

107

100 103

107 105

102

Fig.1C

A ——

109

Fig.2

Fig.3A

150

Fig.3B

Fig.4A

Fig.4B

Fig.5A

Fig.5B

Fig.6A

Fig.6B

Fig. 7

107    105

102

Fig.8

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2450989 A2
- US 2006006063 A1
- JP 2004303622 A
- US 2006008702 A1
- JP 5129020 A
- JP 2000251942 A